# EUROPÄISCHE PATENTSCHRIFT

(11) **EP 2 067 230 B1**
(45) Veröffentlichungstag und Bekanntmachung des Hinweises auf die Patenterteilung: **22.09.2010**
(21) Anmeldenummer: 08757931.4
(22) Anmeldetag: 12.04.2008
(51) Int. Cl.: H02J 3/38, H02M 3/158, H02M 7/48

(54) **VORRICHTUNG ZUR EINSPEISUNG ELEKTRISCHER ENERGIE IN EIN ENERGIEVERSORGUNGSNETZ UND GLEICHSPANNUNGSWANDLER FÜR EINE SOLCHE VORRICHTUNG**
APPARATUS FOR FEEDING ELECTRICAL ENERGY INTO AN ENERGY SUPPLY SYSTEM AND DC VOLTAGE TRANSFORMER FOR SUCH AN APPARATUS
DISPOSITIF DESTINÉ À L'ALIMENTATION EN ÉNERGIE ÉLECTRIQUE D'UN RÉSEAU D'ALIMENTATION EN ÉNERGIE ET CONVERTISSEUR POUR UN TEL DISPOSITIF

(30) Priorität: 15.06.2007 DE 102007028078
(43) Veröffentlichungstag der Anmeldung: 10.06.2009
(73) Patentinhaber: SMA Solar Technology AG, 34266 Niestetal (DE)
(72) Erfinder: ZACHARIAS, Peter, 34131 Kassel (DE); SAHAN, Benjamin, 34121 Kassel (DE)
(74) Vertreter: Walther, Walther & Hinz GbR
(86) Internationale Anmeldenummer: PCT/DE2008/000620
(87) Internationale Veröffentlichungsnummer: WO 2009/010025

(56) Entgegenhaltungen:
- DE-A1-102004 037 446
- JP-A- 11 235 024
- US-A1- 2007 047 277

## Beschreibung

Die Erfindung betrifft eine Vorrichtung der im Oberbegriff des Anspruchs 1 angegebenen Gattung und einen dafür geeigneten Gleichspannungswandler.

Zur Einspeisung elektrischer Energie, die mit Gleichspannungsgeneratoren wie z. B. Photovoltaik- oder Brennstoffzellenanlagen erzeugt wird, in ein Wechselstromnetz, insbesondere das öffentliche Energieversorgungsnetz (50/60 Hz), werden Wechselrichter der verschiedensten Art verwendet. Zwischen dem Gleichspannungsgenerator und dem Wechselrichter ist in den meisten Fällen ein Gleichspannungswandler (DC-DC-Steller) vorgesehen, der dem Zweck dient, die vom Gleichspannungsgenerator gelieferte Gleichspannung in eine vom Wechselrichter benötigte bzw. an diesen angepasste Gleichspannung umzuwandeln.

Aus verschiedenen Gründen ist es erwünscht, einen der Ausgänge des Gleichspannungsgenerators zu erden. Der Grund für die gewünschte Erdung besteht einerseits darin, dass es Länder gibt, in denen eine solche Erdung vorgeschrieben ist. Andererseits ergeben sich bei fehlender Erdung verschiedene Nachteile beim Betrieb. Hierzu zählt u. a. das Problem der hochfrequenten Ableitströme. Aufgrund von unvermeidbaren, parasitären Kapazitäten zwischen dem Gleichspannungsgenerator und Erde kann es bei Potentialschwankungen zu nicht unerheblichen Ausgleichsströmen kommen, die ein nicht tolerierbares Sicherheitsrisiko darstellen, daher zum Berührungsschutz bzw. zur Herstellung der elektromagnetischen Verträglichkeit (EMV) aufwendige Überwachungsmaßnahmen mit Hilfe von Fehlerstromsensoren od. dgl. erforderlich machen und nur durch Erdung sicher vermieden können. Außerdem ist bekannt, dass Photovoltaik-Generatoren sich sehr unterschiedlich bezüglich Degradation verhalten, je nachdem mit welcher Technologie sie hergestellt wurden. Generatoren mit kristallinen und polykristallinen Zellen oder bestimmten Dünnschichtmodulen werden bevorzugt mit dem negativen Anschluss geerdet, während Rückseiten-Kontaktzellen bevorzugt am positiven Anschluss geerdet werden.

Eine Erdung der beschriebenen Art, durch welche die genannten Nachteile vermieden werden könnten, ist ohne weiteres dann möglich, wenn Gleichspannungswandler mit Transformatoren verwendet werden, die eine galvanische Trennung der Gleichspannungsseite von der Wechselspannungsseite herbeiführen. Transformatoren haben aber unabhängig davon, ob Netztransformatoren oder Hochfrequenztransformatoren verwendet werden, u. a. eine Reduzierung des Wirkungsgrades, zum Teil erhebliche Gewichte und Baugrößen und/oder einen zusätzlichen Regelungsaufwand zur Folge, weshalb grundsätzlich transformatorlose Spannungswandler bevorzugt werden. Die üblichen Topologien von transformatorlosen Gleichspannungswandlern machen jedoch die gewünschte Erdung entweder unmöglich, da dies zum Kurzschließen von benötigten Schaltern, Kapazitäten od. dgl. führen würde, oder haben einen erhöhten Schaltungsaufwand und andere Nachteile zur Folge.

Es sind daher bereits zahlreiche Versuche unternommen worden, das Auftreten der genannten Nachteile auf anderem Wege zu vermeiden. Insbesondere sind Schaltungen bekannt, die dem Zweck dienen, die unerwünschten Ableitströme zu reduzieren (z. B. DE 10 2004 037 446 A1, DE 102 21 592 A1, DE 10 2004 030 912 B3). In diesen Schaltungen wird z. B. ein Solargenerator in bestimmten Phasen des inneren elektrischen Energietransports vom Netz isoliert betrieben.

Bei der periodischen erneuten elektrischen Verbindung des Solargenerators mit dem Netz werden dann dessen parasitäre Kapazitäten nur geringfügig umgeladen, so dass sich das Potential des Solargenerators mit Netzfrequenz, sinusförmig und bei einer Spannungsamplitude, die der halben Netzspannung entspricht, ändert. Hochfrequenzströme bilden sich dann durch die geringen Spannungsunterschiede des Solargenerators nur zwischen zwei Schalttakten sowie durch Unsymmetrien beim Schalten aus. Kapazitive Ableitströme lassen sich auf diese Weise daher zwar stark minimieren, aber prinzipiell nicht völlig vermeiden.

Weiterhin ist eine Schaltungsanordnung bekannt (DE 102 25 020 A1), die einen geteilten Solargenerator verwendet, dessen Mittelpunkt geerdet ist. Damit haben alle Teile des Solargenerators ein festes Potential, und kapazitive Ableitströme können prinzipiell nicht fließen. Da die beiden Gleichstromquellen unterschiedliche Ergiebigkeiten haben, ist außerdem eine Schaltung zur Kompensation der Leistungsdifferenzen und Spannungen vorgesehen. Nachteilig sind in diesem Schaltungsvorschlag die hohen Spannungsdifferenzen im Solargenerator und an den Schaltern, die zusätzlichen Verluste in der Kompensationsschaltung und der Umstand, dass mindestens vier hochfrequent getaktete Schalter benötigt werden.

Daneben sind auch bereits Schaltungsanordnungen bekannt, mit denen ein Solargenerator trotz Fehlens eines Transformators einseitig geerdet werden kann. Dadurch werden kapazitive Ableitströme prinzipbedingt verhindert. Eine dieser Schaltungsanordnungen (DE 196 42 522 C1) benötigt allerdings fünf aktive Schalter, wobei ein bzw. zwei Schalter gleichzeitig hochfrequent schalten und den mittleren Ausgangsstrom bereitstellen müssen. Bei dieser auch als "Flying Inductor" bezeichneten Schaltung wird daher der Wirkungsgrad durch die hohe Zahl der gleichzeitig in Serie am Stromfluss beteiligten Bauelemente beeinträchtigt. Nachteilig ist bei dieser Schaltung auch, dass lückende Strompulse in das Netz eingeprägt werden, die ein kapazitives Netzfilter erforderlich machen, das prinzipbedingt durch seinen eigenen Blindleistungsbedarf den Leistungsfaktor, aber auch den Wirkungsgrad der Schaltung im Teillastbereich verschlechtert. Ein derartiges kapazitives Netzfilter kann zwar mit einer anderen bekannten Schaltung vermieden werden (DE 197 32 218 C1), doch werden dazu neun aktive Schalter benötigt, von denen mindestens zwei gleichzeitig mit hohen Frequenzen geschaltet werden müssen, so dass der konstruktive Aufwand noch weiter erhöht und sowohl die Robustheit als auch der Wirkungsgrad der Gesamtvorrichtung negativ beeinflusst würde. Die Topologie eines Flying Inductor hat außerdem den Nachteil, dass die Spannungsbelastung der Schalter von der Netzspannung abhängt und sensibel gegenüber Netzstörungen ist und nur dadurch dreiphasig betrieben werden kann, dass er mit Hilfe von drei Wechselrichtern dreifach angewendet wird. Abgesehen davon werden Wechselrichter mit Stromquellencharakteristik benötigt, was in vielen Fällen nicht erwünscht ist.

Schließlich sind Vorrichtungen bekannt (US 2007/0047277 A1), die für Wechselrichter mit einem bipolaren Spannungszwischenkreis bestimmt sind, der zwei in Serie liegende, an einem Erdanschluss miteinander verbundene Kondensatoren enthält. Derartige Wechselrichter, die heute überwiegend für die hier interessierenden Zwecke angewendet werden, können als sogenannte Halbbrückenwechselrichter, als Halbbrückenwechselrichter in 3-Punkt-Schaltung und je nach Bedarf als Wechselrichter für eine einphasige oder dreiphasige Netzeinspeisung ausgebildet sein. In allen diesen Fällen bildet der Verbindungspunkt zwischen den beiden Kondensatoren einen Erdanschluss, der dem Null- bzw. Neutralleiter des jeweiligen Netzes zugeordnet ist und mit diesem verbunden wird.

Der Gleichspannungswandler dieser bekannten Vorrichtung enthält eine Drossel, zwei Dioden und einen Schalter. Der Erdanschluss des Wechselrichters kann in diesem Fall mit dem negativen Ausgang des Gleichspannungsgenerators verbunden werden. Das wird durch Anwendung einer Speicherdrossel ermöglicht, die aus zwei magnetisch gekoppelten Wicklungen zusammengesetzt ist. Die beiden Wicklungen dieser Speicherdrossel sind an einem Ende derart galvanisch miteinander verbunden, dass einerseits bei geschlossenem Schalter eine der beiden Wicklungen vom Gleichspannungsgenerator und die andere Wicklung aufgrund der magnetischen Kopplung über die erste Wicklung aufgeladen wird und dass andererseits bei offenem Schalter beide Wicklungen über je einen zugeordneten der beiden Kondensatoren und eine zugehörige Diode entladen werden.

Dem Vorteil, dass diese Vorrichtung mit vergleichsweise einfachen Mitteln, insbesondere ohne Transformator und mit nur einem Schalter eine Erdung des Gleichspannungsgenerators ermöglicht, steht der Nachteil gegenüber, dass der Erdanschluss nur mit dem negativen Ausgang des Gleichspannungswandlers verbunden werden kann. Weiterhin ist es bei der Vorrichtung nicht möglich, die vom Erdanschluss zum Gleichspannungsgenerator führende Erdleitung auf Fehlerströme zu überwachen, da in dieser Erdleitung prinzipbedingt auch Betriebsströme fließen.

Aus der JP 11 235024 A1 ist eine Schaltung mit einer Energiespeicherdrossel und zwei in Reihe dazu angeschlossene Schaltern bekannt. Ausgangsspannungseitig sind zwei Dioden vorhanden, um den Eingang und den Ausgang zu entkoppeln. Verwendet wird ein DC-AC-Wandler mit Minus- und Pluseingang und einem dreiphasigen Wechselstrom-Ausgang. Eine Erdung ist weder am Eingang noch am Ausgang des DC-AC-Wandlers vorgesehen. Es wird offen gelassen, ob der DC-AC-Wandler transformatorlos ist. Am Ausgang der DC-DC-Schaltung ist nur ein einziger Kondensator vorhanden. Durch diese Schaltung soll ein birektioneller Betrieb eines DC-DC-Wandlers geschaffen werden.

Ausgehend von diesem Stand der Technik besteht das technische Problem der Erfindung darin, die Vorrichtung der eingangs bezeichneten Gattung und insbesondere einen dafür geeigneten Gleichspannungswandler so auszubilden, dass eine Erdung des Gleichspannungsgenerators an einem beliebigen Anschluss möglich ist und dies mit vergleichsweise einfachen konstruktiven Mitteln realisiert werden kann.

Gelöst wird dieses Problem erfindungsgemäß mit den kennzeichnenden Merkmalen der Ansprüche 1 und 16.

Die Erfindung ermöglicht einen geerdeten Betrieb des Gleichspannungsgenerators durch Anwendung eines Gleichspannungswandlers, der im einfachsten Fall lediglich eine Speicherdrossel, zwei Dioden und zwei Schalter benötigt. Dadurch wird trotz eines nur geringfügig erhöhten Aufwands der Vorteil erzielt, dass der Gleichspannungsgenerator praktisch an einer beliebigen Stelle geerdet werden kann.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
- Fig. 1 bis 3: ein erstes Ausführungsbeispiel einer erfindungsgemäßen Vorrichtung zur Einspeisung elektrischer Energie in ein Energieversorgungsnetz mit drei unterschiedlichen Erdungsmöglichkeiten für einen Gleichspannungsgenerator;
- Fig. 4: die Signale zur Steuerung von zwei Schaltern der Vorrichtung nach Fig. 1 bis 3 und daraus resultierende Stromverläufe;
- Fig. 5: eine Vorrichtung entsprechend Fig. 1 bis 3, jedoch mit einem geringfügig modifizierten Gleichspannungswandler;
- Fig. 6 und 7: ein zweites Ausführungsbeispiel einer erfindungsgemäßen Vorrichtung mit zwei unterschiedlichen Erdungsmöglichkeiten für einen Gleichspannungsgenerator;
- Fig. 8 bis 10: schematisch den Gleichspannungswandler nach Fig. 6 und 7 als Bauelement mit durch Steckkontakte wählbarem Aufbau; und
- Fig. 11 bis 13: verschiedene Typen von Wechselrichtern, die alternativ zum Wechselrichter nach Fig. 1 bis 3 mit dem erfindungsgemäßen Gleichspannungswandler betrieben werden können.

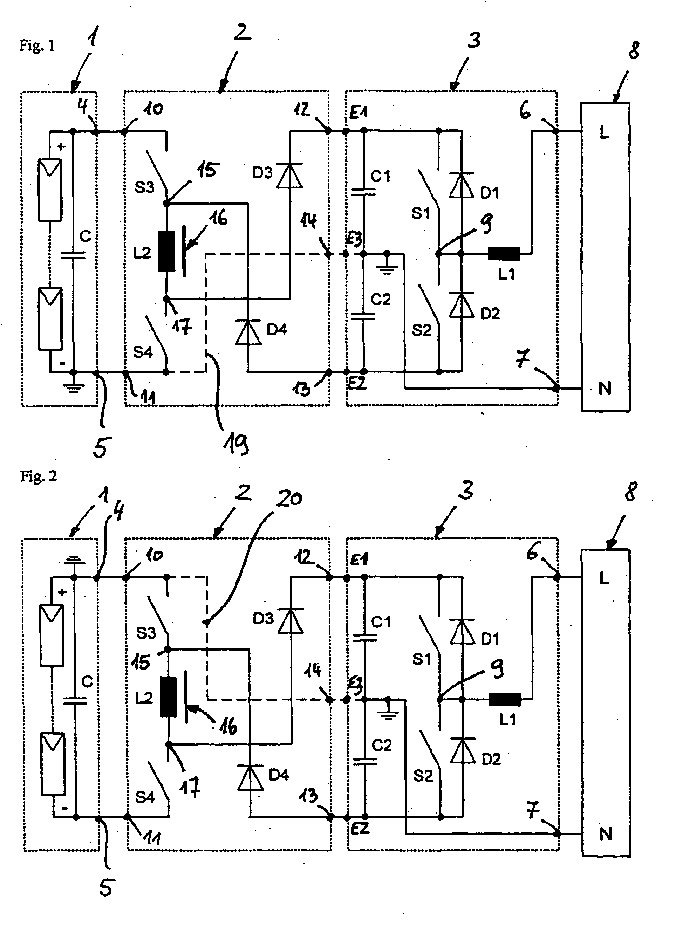

Nach Fig. 1 enthält eine Vorrichtung zur Erzeugung elektrischer Energie einen Gleichspannungsgenerator 1, einen Gleichspannungswandler 2 und einen Wechselrichter 3. Der Gleichspannungsgenerator 1 besteht z. B. aus einer Photovoltaik- oder Brennstoffzellenanlage und weist an Ausgängen 4 (+) und 5 (-) einen diesen parallel geschalteten Kondensator C auf.

Ein im Rahmen der vorliegenden Anmeldung bevorzugter Wechselrichter 3 weist zwei Ausgänge 6 und 7 auf, die hier zur einphasigen Einspeisung der elektrischen Energie in ein Energieversorgungsnetz 8 dienen, dessen Phase L mit dem Ausgang 6 und dessen Null- oder Neutralleiter N mit dem Ausgang 7 verbunden wird. Der Wechselrichter 3 enthält außerdem drei Eingänge E1, E2 und E3. Zwischen den Eingängen E1 und E2 sind zwei in Serie verbundene Kondensatoren C1 und C2 angeordnet, deren Verbindungspunkt am Eingang E3 liegt. Die Kondensatoren C1 und C2 bilden einen üblichen, bipolaren Spannungszwischenkreis des Wechselrichters 3. Der Wechselrichter 3 ist gemäß Fig. 1 als Halbbrückenwechselrichter ausgebildet und dazu mit zwei Schaltern S1 und S2 versehen, deren einer Anschluss jeweils mit einem der Eingänge E1 bzw. E2 verbunden ist und deren anderer Anschluss zu einem gemeinsamen Verbindungspunkt 9 und von dort über eine Glättungs- bzw. Netzdrossel L1 zum Ausgang 6 führt. Beiden Schaltern S1, S2 ist außerdem je eine Diode D1, D2 parallel geschaltet, wobei die Diode D1 vom Verbindungspunkt 9 aus in Richtung des Eingangs E1 und die Diode D2 vom Eingang E3 aus in Richtung des Verbindungspunkts 9 leitend gemacht werden kann und in der entgegengesetzten Richtung jeweils sperrt. Schließlich ist der Eingang E3 direkt mit dem Ausgang 7 verbunden, andererseits an Erde gelegt und damit als Erdanschluss ausgebildet.

Der Wechselrichter 3 arbeitet im Wesentlichen wie folgt: Werden die Schalter S1, S2 abwechselnd ein- bzw. ausgeschaltet, dann wird z. B. während der positiven Halbwelle des Schaltsignals (Schalter S1 zunächst geschlossen, Schalter S2 offen) die gegenüber E3 positive Seite (Eingang E1) des Kondensators C1 über den Verbindungspunkt 9 und die Netzdrossel L1 an die Phase L gelegt. Beim nachfolgenden Öffnen des Schalters S1 kann der Strom weiter durch die Netzdrossel L1, den Kondensator C2 und die Diode D2 fließen. Während der negativen Halbwelle des Netzes 8 (Schalter S1 offen, Schalter S2 zunächst geschlossen) wird dagegen die gegenüber E3 negative Seite (Eingang E2) des Kondensators C2 über den Verbindungspunkt 9 und die Drossel L1 an die Phase L gelegt, wobei der Strom nach dem Schließen des Schalters S2 weiter durch die Diode D1 und den Kondensator C1 fließen kann. Die beiden Kondensatoren C1, C2 werden dadurch abwechselnd entladen, während ihre Aufladung in bekannter Weise mit Hilfe irgendeines geeigneten Gleichspannungswandlers erfolgt.

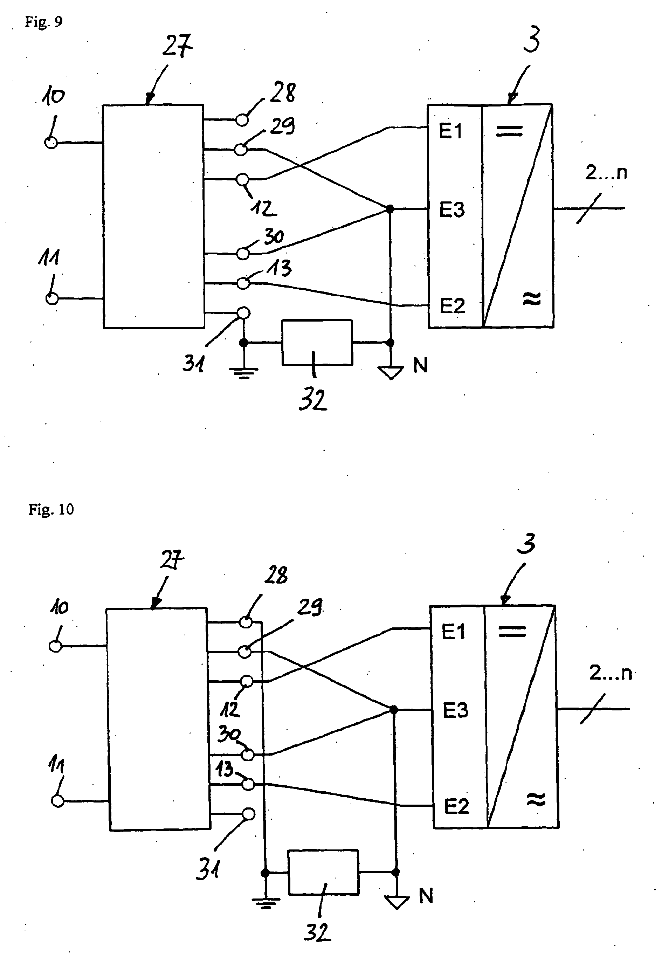

Vorrichtungen der beschriebenen Art sind allgemein bekannt (z. B. US 2007/0047277 A1, Fig. 10) und brauchen dem Fachmann daher nicht näher erläutert werden.

Ein erfindungsgemäßer Gleichspannungswandler 2 enthält gemäß Fig. 1 zwei Eingänge 10 und 11, die mit den beiden Ausgängen 4 und 5 des Gleichspannungsgenerators verbunden werden, sowie drei Ausgänge 12, 13 und 14, die an die Eingänge E1, E2 und E3 des Wechselrichters 3 angeschlossen sind. An den Eingang 10 ist ein Schalter S3 angeschlossen, der zu einem Verbindungspunkt 15 führt. An diesem Verbindungspunkt 15 ist der eine Anschluss einer Speicherdrossel 16 angeschlossen, deren anderer Anschluss an einem Verbindungspunkt 17 liegt, der über einen zweiten Schalter S4 mit dem Eingang 11 verbunden ist. Außerdem ist der Verbindungspunkt 17 über eine erste Diode D3 mit dem Ausgang 12 verbunden, während der Ausgang 13 über eine zweite Diode D4 zum Verbindungspunkt 15 führt. Die Diode D3 kann in Richtung des Ausgangs 12, die Diode D4 in Richtung des Verbindungspunkts 15 leitend gemacht werden, während beide in der jeweils entgegengesetzten Richtung sperren. Damit ergibt sich für den Gleichspannungswandler 2 folgende Betriebsweise:

Bei gleichzeitig geschlossenen Schaltern S3 und S4 wird die Speicherdrossel 16 vom Gleichspannungsgenerator 1 bzw. dessen Kondensator C aufgeladen. Der Schalter S3, die Speicherdrossel 16 und der Schalter S4 bilden einen ersten Serien-Stromkreis, der zur Speicherung elektrischer Energie in der Speicherdrossel 16 dient. Die Dioden D3 und D4 sperren zu dieser Zeit einen Stromfluss zu oder von den Kondensatoren C1 und C2. Werden dagegen beide Schalter S3 und S4 gleichzeitig geöffnet, dann entlädt sich die Speicherdrossel 16 über die Diode D3, die in Reihe liegenden Kondensatoren C1 und C2 sowie die Diode D4. Die Speicherdrossel 16 bildet in dieser Phase zusammen mit den Teilen D3, C1, C2 und D4 einen zweiten, zur Entladung der Speicherdrossel 16 bzw. zur entsprechenden Aufladung der Kondensatoren C1, C2 bestimmten Serien-Stromkreis. Haben beide Kondensatoren C1, C2 dieselbe Kapazität, dann werden sie auf gleiche Spannungen UC1 = UC2 aufgeladen.

Die Spannungsbelastung der Schalter S3, S4 im geöffneten Zustand ist vergleichsweise gering. Bei leitenden Dioden D3 und D4 beträgt die Spannung am Schalter S3 maximal US3 = UC + UC2, wobei UC die Ausgangsspannung des Gleichspannungsgenerators 1 ist. Die Spannung am Schalter S4 beträgt dagegen maximal US4 = UC1.

Abgesehen davon bringt der beschriebene Gleichspannungswandler 2 den Vorteil mit sich, dass der Gleichspannungsgenerator 1 mit einem vergleichsweise großen Bereich von Ausgangsspannungen betrieben werden kann. Würde der Gleichspannungswandler 2 fehlen, dann müsste sichergestellt werden, dass der Gleichspannungsgenerator 1 auch unter ungünstigen Verhältnissen stets eine so hohe Ausgangsspannung an die Eingänge E1 und E2 liefert, dass die Kondensatoren C1 und C2 auf eine höhere Spannung aufgeladen werden, als der Netzamplitude (in der Regel ca. ± 325 V) entspricht. Ist dagegen ein hochsetzender Gleichspannungswandler 2 vorhanden, dann können die Spannungen an den Kondensatoren C1, C2 über die Wahl des Tastverhältnisses, mit dem die Schalter S3 und S4 betrieben werden, auch dann auf die gewünschte Höhe eingestellt werden, wenn die Ausgangsspannung des Gleichspannungsgenerators 1 kleiner ist, als vom Wechselrichter 3 (bzw. vom Netz 8) mindestens benötigt wird.

Die beschriebene Vorrichtung ist weiterhin sehr flexibel einsetzbar. Das ergibt sich daraus, dass die Spannungen an C1 und C2 in Abhängigkeit vom gewählten Tastverhältnis für S3 und S4 sowohl größer als auch kleiner als die Eingangsspannung am Kondensator C sein können. Ist das Tastverhältnis größer als 0,5, dann arbeitet der Gleichspannungswandler hochsetzend. Ist das Tastverhältnis kleiner als 0,5, dann arbeitet der Gleichspannungswandler 2 tiefsetzend. Ein Tastverhältnis von 0,5 führt praktisch zu einer Direkteinspeisung der am Ausgang des Gleichspannungsgenerators 1 anliegenden Spannung. Die maximale Spannungsbelastung der Wechselrichterschalter S1 und S2 beträgt etwa 2 . UC1, wobei UC1 die maximale Spannung am Kondensator C1 ist. Im einfachsten Fall kann auch immer nur einer dieser Schalter pro halber Netzperiode hochfrequent geschaltet werden, während der andere ausgeschaltet bleibt. Außerdem ist auf der Wechselrichterseite ein kontinuierlicher Stromfluss in das Netz 8 möglich.

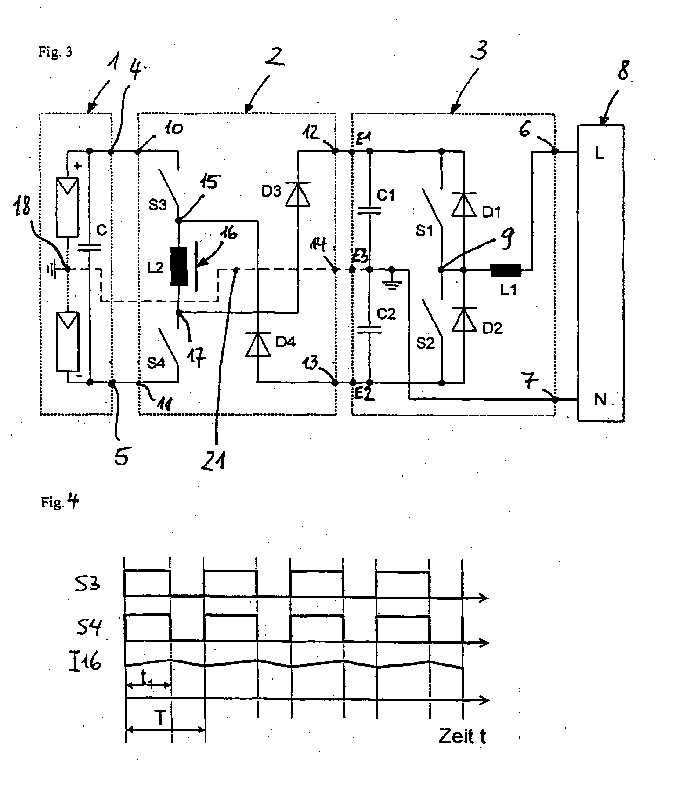

Ein besonders großer Vorteil der Erfindung ergibt sich schließlich daraus, dass der Erdungspunkt E3 wahlweise mit dem Eingang 11 des Gleichspannungswandlers 2 und dadurch mit dem negativen Ausgang 5 (Fig. 1), dem Eingang 10 des Gleichspannungswandlers 2 und dadurch mit dem positiven Ausgang 5 (Fig. 2) oder irgendeinem anderen Anschluss 18 (Fig. 3) des Gleichspannungsgenerators 1 verbunden werden kann, wie dies auch für den Neutralleiter N des Netzes 8 gilt. Während des normalen Betriebs ist eine jeweils gestrichelt dargestellte Erdungsleitung 19 (Fig. 1) bzw. 20 (Fig. 2) bzw. 21 (Fig. 3), die den Erdungspunkt E3 mit dem entsprechenden Eingang des Gleichspannungswandlers 2 bzw. dem entsprechenden Ausgang des Gleichspannungsgenerators 1 verbindet, stromlos. Das ist insbesondere eine Folge davon, dass die Speicherdrossel 16 während der Entladezyklen zusammen mit den Teilen E3, C1, C2 und D4 einen in sich geschlossenen Stromkreis bildet, der die Leitungen 19, 20 bzw. 21 nicht enthält. Daher kann, falls in der Leitung 19, 20 bzw. 21 dennoch ein Strom fließt, auf einen Fehler in der Anlage geschlossen werden. Erfindungsgemäß wird daher in die Leitung 19, 20 oder 21 vorzugsweise ein Überwachungsetement in Form eines Schutzschalters od. dgl. angeordnet, das beim Überschreiten eines vorgewählten, maximal tolerierbaren Stroms die Anlage automatisch abschaltet. Diese Funktion ist unabhängig davon, mit welchem Eingang des Gleichspannungswandlers 2 bzw. mit welchem Ausgang des Gleichspannungsgenerators 1 der Erdanschluss E3 verbunden wird.

Die Schalter S1 bis S4 sind in bekannter Weise zweckmäßig als Halbleiterschalter ausgebildet, die beim Betrieb mit nicht dargestellten Steuereinheiten (Microcontroller, PWM-Steuerungen usw.) periodisch ein- und ausgeschaltet werden können, wobei die Schaltfrequenz z. B. 16 kHz oder mehr beträgt.

Die Signale für die Ansteuerung der Schalter S3 und S4 sowie den Stromverlauf in der Speicherdrossel 16 ergeben sich beispielhaft aus Fig. 4. Daraus ist ersichtlich, dass die beiden Schalter S3, S4 immer gleichzeitig ein- bzw. ausgeschaltet werden.

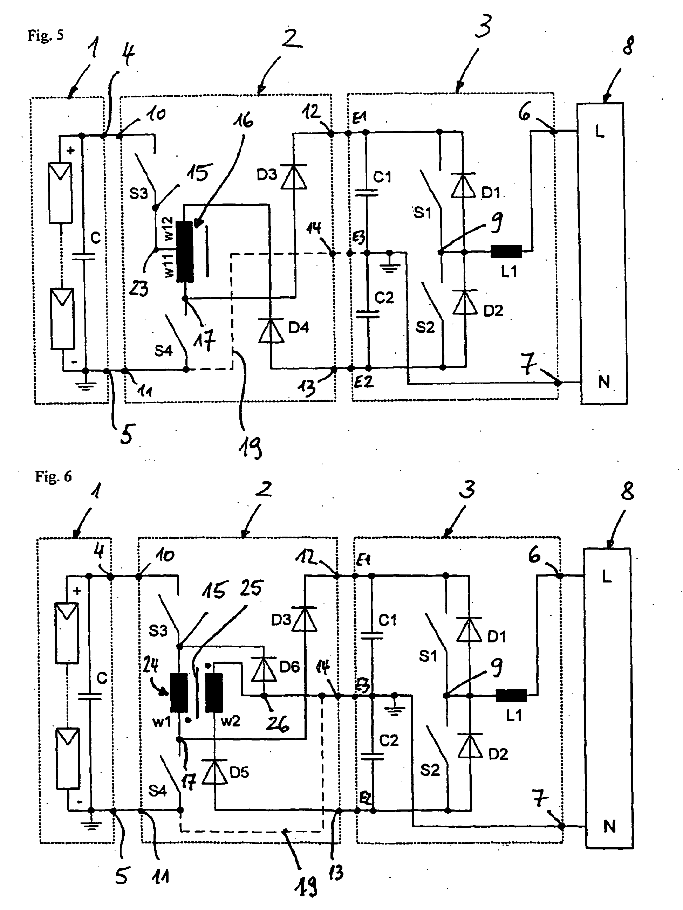

Fig. 5 zeigt ein gegenüber Fig. 1 bis 3 dadurch modifiziertes Ausführungsbeispiel, dass die Speicherdrossel 16 durch einen Mittelanschluss bzw. eine Wicklungsanzapfung 23 in zwei Wicklungsteile W11 und W12 geteilt ist. Die Anordnung ist in diesem Fall so getroffen, dass der Verbindungspunkt 15 an die Anzapfung 23 angeschlossen ist und daher nur der durch die Anzapfung 23 festgelegte Teil W11 der Speicherdrossel 16 im ersten Stromkreis liegt, der dem Laden der Speicherdrossel 16 dient, wohingegen der zweite Stromkreis die gesamte, zwischen den Dioden D4 und D3 liegende Speicherdrossel 16 bzw. den Teil W11 + W12 davon enthält. Dadurch lässt sich erfindungsgemäß ein weiteres Optimierungspotential der erfindungsgemäßen Anordnung für das Verhältnis von Eingangsspannung und Ausgangsspannung, die Belastung des Schalters S3 und die Dioden D3 und D4 erschließen. Bei größeren Übersetzungsverhältnissen besteht neben dem Tastverhältnis für S3 und S4 auch die Möglichkeit, über das Verhältnis von (W12 + W11) : W11 auf die effektive Strom- und Spannungsbelastung der Bauelemente Einfluss zu nehmen. Die Lage der Anzapfung 23 kann im Prinzip beliebig gewählt werden. Ein besonderer Vorteil der Anzapfung 23 besteht darin, dass die maximale Spannungsbelastung am Schalter S3 im offenen Zustand nur noch durch die Spannung US3 = UC + [- n/(n + 1)] · UC1 + UC2 gegeben ist, worin n = W12/W11 und W11 und W12 gleichzeitig die Windungszahlen der Wicklungen W11 und W12 bedeuten. Die Spannungsbelastung am Schalter S4 ist US4 = UC1. Alternativ ist es außerdem möglich, die Anzapfung 23 in analoger Weise mit dem Schalter S4 zu verbinden. Im Übrigen entspricht die Vorrichtung nach Fig. 5 derjenigen nach Fig. 1 bis 3, weshalb der Ausgang 14 des Gleichspannungswandlers 2 wahlweise mit dem Ausgang 4 oder 5 oder irgendeinem anderen Ausgang des Gleichspannungsgenerators 1 verbunden werden kann.

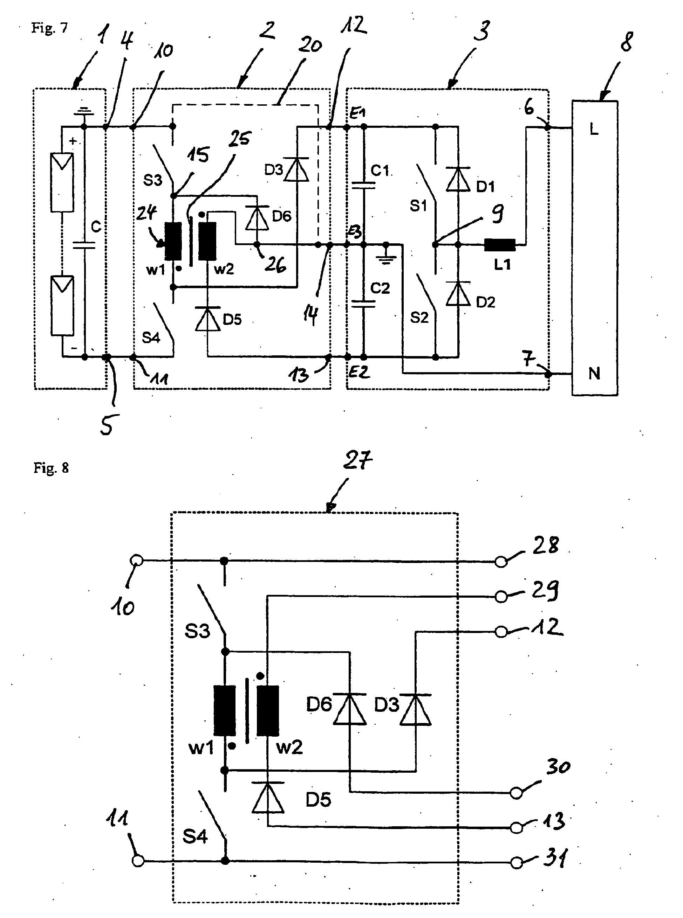

Ein weiteres Ausführungsbeispiel der Erfindung ist in Fig. 6 und 7 dargestellt. Dieses unterscheidet sich von dem nach Fig. 1 bis 5 insbesondere dadurch, dass die beschriebenen Vorteile hier mit einer an sich bekannten gekoppelten, jedoch elektrisch in einer bisher nicht bekannten Weise verbundenen Speicherdrossel 24 erzielt werden. Die Speicherdrossel 24 enthält eine erste Wicklung W1 und eine zweite W2, die beide magnetisch miteinander gekoppelt und dazu z. B. auf einen gemeinsamen Kern 25 gewickelt sind.

Die erste Wicklung W1 ist wie die Drosselspule 16 in Fig. 1 elektrisch zwischen den beiden Schaltern S3, S4 bzw. zwischen den beiden Verbindungspunkten 15 und 17 angeordnet. Der Verbindungspunkt 17 ist außerdem wie in Fig. 1 über die Diode D3 mit dem Ausgang 12 verbunden. Dagegen ist der Eingang 13 des Gleichspannungswandlers 2 über eine Diode D5 mit einem Anschluss der Wicklung W2 verbunden, deren anderer Anschluss über einen Verbindungspunkt 26 und eine Diode D6 zum Verbindungspunkt 15 führt. Außerdem ist der Verbindungspunkt 26 mit dem Ausgang 14 verbunden. Durch diese Maßnahme wird folgende Betriebsweise erreicht:

Die erste Wicklung W1 der Speicherdrossel 24 bildet mit den beiden Schaltern S3, S4 einen ersten Serien-Stromkreis, der parallel an den Ausgängen 4, 5 des Gleichspannungsgenerators 1 liegt und bei geschlossenen Schaltern S3, S4 dem Laden der Wicklung W1 mit elektrischer Energie dient. Da die beiden Wicklungen W1, W2 magnetisch gekoppelt sind, wird die Wicklung W2 während dieser Phase über die Wicklung W1 ebenfalls geladen. Der Wicklungssinn beider Wicklungen W1, W2 ist dabei so gewählt, dass an in Fig. 6 durch eingezeichnete Punkte angedeuteten Anschlüssen dieselben Spannungspolaritäten erhalten werden.

Im offenen Zustand der Schalter S3, S4 liegen beide Wicklungen W1, W2 in einem zweiten Serien-Stromkreis, der von einem der Anschlüsse der Wicklung W1 (Verbindungspunkt 17) über die Diode D3, die in Serie liegenden Kondensatoren C1 und C2, die Diode D5, die Wicklung W2, den Verbindungspunkt 26 und die Diode D6 zurück zum anderen Anschluss der Wicklung W1 (Verbindungspunkt 15) führt. Wie im Fall der Fig. 1 ist dieser zweite Stromkreis ein in sich geschlossener Stromkreis, der dem gemeinsamen Entladen der Wicklungen W1, W2 bzw. dem gemeinsamen Laden der Kondensatoren C1, C2 dient. Außerdem werden die beiden Wicklungen W1, W2 durch diesen Stromkreis galvanisch miteinander verbunden.

Als Folge dieser Anordnung ist es möglich, den Ausgang 14 des Gleichspannungswandlers 2 bzw. den Ausgang E3 des Wechselrichters 3 durch die Leitung 19 (Fig. 6) oder die Leitung 20 (Fig. 7) wahlweise mit dem Eingang 11 oder 10 des Gleichspannungswandlers 2 und damit auch wahlweise mit dem Ausgang 5 oder 4 des Gleichspannungsgenerators 1 zu verbinden, um diesen am negativen Ausgang 5 (Fig. 6) oder am positiven Ausgang 4 (Fig. 7) zu erden. Außerdem könnte der Eingang E3 analog zu Fig. 3 mit irgendeinem mittleren Ausgang des Gleichspannungsgenerators 1 verbunden werden. In allen beschriebenen Fällen sind diese Leitungen 19, 20 und ggf. 21 im normalen Betrieb nicht benutzt, da über diese Leitungen 19 bis 21 weder beim Laden noch beim Entladen der Speicherdrossel 16 ein Strom fließen kann. Infolgedessen würde wie im Fall der Fig. 1 bis 5 ein dennoch gemessener Stromfluss in diesen Leitungen 19 bis 21 bzw. zwischen dem Erdungspunkt E3 und einem der Anschlüsse 4, 5 oder 18 einen Fehler in der Anlage bzw. im Gleichspannungswandler 2 anzeigen und zur Abschaltung der Anlage benutzt werden können.

Ein Vorteil der Vorrichtung nach Fig. 6 gegenüber der Vorrichtung nach Fig. 1 bis 3 ergibt sich aus der geringeren Spannungsbelastung des Schalters S3. Da in der Sperrphase der Schalter S3 und S4 die Diode D6 leitend ist, liegt an Schalter S3 maximal die Spannung UC, während an S4 wiederum die Spannung UC1 liegt, da auch die Diode D3 leitend ist. Dagegen ist bei der Vorrichtung nach Fig. 7 die Spannungsbelastung am Schalter S3 gleich Null und am Schalter S4 gleich UC + UC1.

Nach einem weiteren, nicht gesondert dargestellten Ausführungsbeispiel der Erfindung kann die Wicklung W1 der Drosselspule 16 analog zu Fig. 5 durch eine Anzapfung in zwei Teile geteilt werden. Wie in Fig. 5 ist es dabei möglich, die Anzapfung an einen der Verbindungspunkte 15, 17 anzuschließen, jedoch beide Wicklungsteile in dem zweiten Stromkreis anzuordnen. Dadurch wird bei Bedarf eine weitere Reduzierung der Spannungsbelastung des Schalters S3 des Ausführungsbeispiels nach Fig. 6 und 7 erreicht.

Die magnetische Kopplung der Wicklungen W1, W2 in Fig. 6 und 7 wird vorzugsweise dadurch erhalten, dass diese je nach Bedarf übereinander oder hintereinander auf einen gemeinsamen Kern gewickelt werden. Sie weisen vorzugsweise dieselben Windungszahlen auf und werden bei der schematisch dargestellten Anordnung nach Fig. 6 und 7 zweckmäßig mit entgegengesetztem Wicklungssinn auf den Kern 25 gewickelt, um die richtigen Stromrichtungen bei den Lade- und Entladevorgängen zu erhalten.

Fig. 8 bis 10 zeigen, wie der Gleichspannungswandler 2, hier speziell der Gleichspannungswandler 2 nach Fig. 6 und 7, als ein Bauteil 27 ausgebildet werden kann, das mit einer Mehrzahl von als Steckkontakte od. dgl. ausgebildeten Anschlüssen versehen ist. Wie Fig. 8 zeigt, weist der Gleichspannungswandler 2 abweichend von Fig. 6 und 7 außer den Eingängen 10, 11 und den Ausgängen 12, 13 noch vier weitere Ausgänge 28, 29, 30 und 31, dagegen nicht den Ausgang 14 auf. Der Anschluss 28 ist mit dem Eingang 10, der Anschluss 31 mit dem Eingang 11 direkt verbunden. Weiter ist der Anschluss 29 mit dem von der Diode D5 entfernten Anschluss der Wicklung W2 und der Anschluss 30 mit dem Verbindungspunkt 26 verbunden, wobei dieser Anschluss in Fig. 8 nicht mit dem Punkt 26 in Verbindung steht. Durch geeignete Verbindungen kann jetzt wahlweise eine Erdung des Gleichspannungsgenerators 1 am negativen Anschluss 5 (Fig. 9) oder am positiven Anschluss 4 (Fig. 10) vorgesehen werden.

Ist eine Erdung am negativen Ausgang 5 erwünscht, wird entsprechend Fig. 9 der Anschluss 31 geerdet und über ein Überwachungselement 32 mit dem Eingang E3 des Wechselrichters 3 und dadurch mit dem Neutralleiter N des Netzes 8 verbunden. Außerdem werden die Anschlüsse 29 und 30 miteinander verbunden. Dadurch wird die aus Fig. 6 ersichtliche Anordnung erhalten, wenn zur Ingebrauchnahme des Bauteils 27 die Ausgänge 4, 5 des Gleichspannungsgenerators 1 an dessen Eingänge 10 und 11, seine Ausgänge 12 und 13 an die Eingänge E1, E2 des Wechselrichters 3 und seine Anschlüsse 29, 30 gemeinsam an den Eingang E3 des Wechselrichters 3 angeschlossen werden.

Ist dagegen eine Erdung am positiven Ausgang des Gleichspannungsgenerators 1 erwünscht, dann wird entsprechend Fig. 10 der Anschluss 28 geerdet und über das Überwachungselement 32 mit dem Eingang E3 des Wechselrichters 3 verbunden. Die übrigen Verbindungen erfolgen wie in Fig. 9. Durch bloßes Umstecken der Anschlüsse 28, 31 des Bauteils 27 bzw. des in diesem befindlichen Gleichspannungswandlers 2 kann daher wahlweise eine Erdung des Gleichspannungsgenerators 1 am positiven oder negativen Ausgang 4, 5 gewählt werden. Weitere Ausgänge des Bauteils 27 könnten dazu dienen, auch mittlere Anschlüsse des Gleichspannungsgenerators 1 zu erden.

Bei Anwendung des Gleichspannungswandlers nach Fig. 1 bis 5 kann in entsprechender Weise vorgegangen werden.

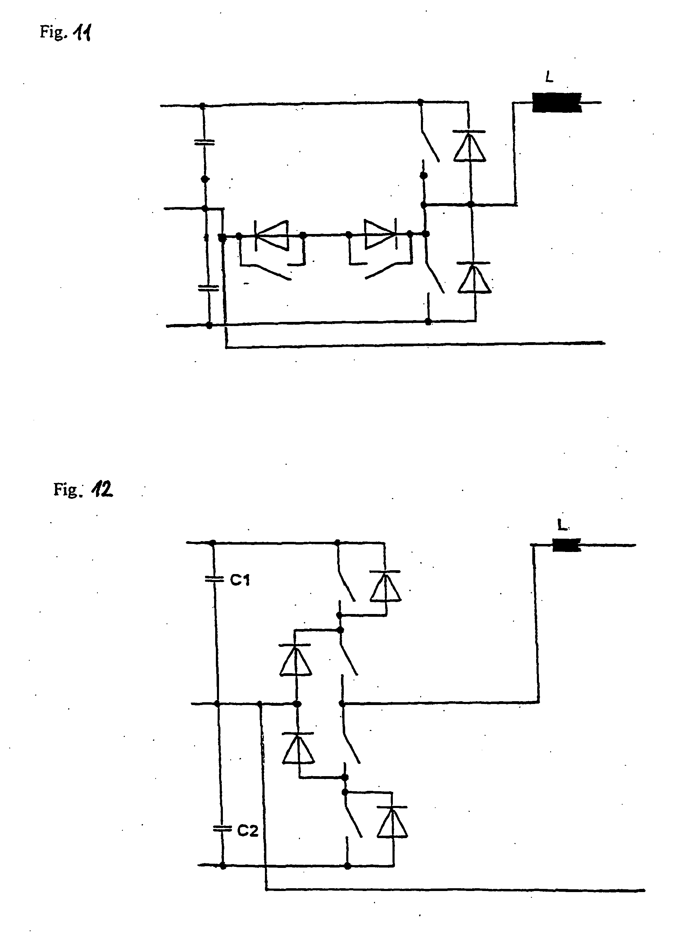

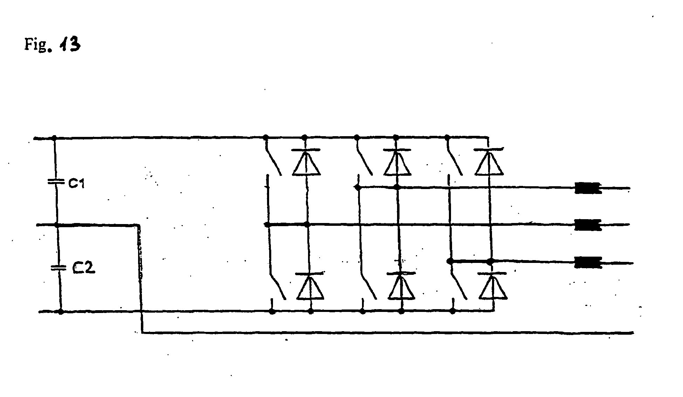

Obwohl die bisherige Beschreibung ausschließlich auf den als Halbbrückenwechselrichter ausgebildeten Wechselrichter 3 Bezug nimmt, ist für den Fachmann klar, dass auch andere Wechselrichter mit einem bipolaren Spannungszwischenkreis an den erfindungsgemäßen Gleichspannungswandler 2 angeschlossen werden können. Das ist schematisch in Fig. 11 bis 13 dargestellt. Fig. 11 zeigt einen Halbbrückenwechselrichter in 3-Punkt-Schaltung, Fig. 12 einen weiteren Wechselrichter in 3-Punkt-Schaltung mit Mittelpunkt (jeweils in 1-phasiger Ausführung) und Fig. 13 einen Wechselrichter für 3-phasige Einspeisung in das Netz 8. Alle drei Wechselrichter haben einen bipolaren Spannungszwischenkreis, die Eingänge E1 bis E3 und die Ausgänge 6, 7 entsprechend der obigen Beschreibung. Da Wechselrichter dieser Art an sich bekannt sind, erscheinen weitere Ausführungen hierzu nicht erforderlich.

Die Erfindung ist nicht auf die beschriebenen Ausführungsbeispiele beschränkt, die auf vielfache Weise abgewandelt werden können. Das gilt insbesondere auch insoweit, als die Wechselrichter 3 und die Gleichspannungswandler 2 zwar bevorzugt, wie aus den Zeichnungen ersichtlich ist, als eine fertige Baueinheit hergestellt und vertrieben werden, aber auch als voneinander getrennte Bauteile hergestellt und vertrieben werden können. Hierfür bieten sich insbesondere die anhand der Fig. 8 bis 10 beschriebenen Ausführungsformen an, durch die eine fabrikmäßige Herstellung von universell einsetzbaren Gleichspannungswandlern möglich ist, die von der im Einzelfall gewünschten Erdungsart des Gleichspannungswandlers 1 unabhängig sind. Daher betrifft die Erfindung nicht nur die Kombination aus einem Gleichspannungswandler 2 und einem Wechselrichter 3, sondern auch den Gleichspannungswandler 2 allein. Weiterhin ist klar, dass in der obigen Beschreibung nur die zum Verständnis der Erfindung erforderlichen Bauteile beschrieben wurden und insbesondere die erforderlichen und an sich bekannten Steuerorgane, MPP-Regelungen usw. zusätzlich vorhanden sein können. Außerdem versteht sich, dass die verschiedenen Merkmale auch in anderen als den beschriebenen und dargestellten Kombinationen angewendet werden können.

## Patentansprüche

1. Vorrichtung zur Einspeisung elektrischer Energie in ein Energieversorgungsnetz (8) mit einem zum Anschluss an einen Gleichspannungsgenerator (1) bestimmten Gleichspannungswandler (2) und einem mit diesem verbundenen, zum Anschluss an das Energieversorgungsnetz (8) bestimmten Wechselrichter (3), der einen bipolaren Spannungszwischenkreis mit zwei in Serie liegenden Kondensatoren (C1, C2) enthält, die an einem mit einem Anschluss des Gleichspannungsgenerators (1) zu verbindenden Erdanschluss (E3) miteinander verbunden sind, wobei der Gleichspannungswandler (2) wenigstens zwei Dioden (D3, D4), einen Schalter und eine Speicherdrossel (16) aufweist, die bei geschlossenem Schalter vom Gleichspannungsgenerator (1) geladen und bei offenem Schalter über die Kondensatoren (C1, C2) und die Dioden (D3, D4) entladen wird,
**dadurch gekennzeichnet,**
**dass** die Speicherdrossel (16) einerseits mit zwei beidseitig der Speicherdrossel in Reihe angeordneten Schaltern (S3, S4) einen ersten, zum Laden der Speicherdrossel (16) bestimmten Stromkreis bildet, der durch Schließen der Schalter (S3, S4) an den Gleichspannungsgenerator (1) angeschlossen ist, während gleichzeitig die sperrenden Dioden (D3, D4) die Speicherdrossel (16) vom Wechselrichter (3) potentialmäßig entkoppeln, und die Speicherdrossel (16) andererseits mit den beiden Dioden (D3, D4) und den beiden Kondensatoren (C1, C2) in einem zweiten, zum gleichzeitigen Entladen der Speicherdrossel (16) über beide Kondensatoren (C1, C2) und Dioden (D3, D4) bestimmten Stromkreis liegt, der durch Öffnen der Schalter (S3, S4) wirksam gemacht wird, so dass beim Entladen der Speicherdrossel (16) der Gleichspannungsgenerator (1) ausschließlich über eine mit dem Erdanschluß (E3) verbundene Erdungsleitung (19, 20, 21) galvanisch mit dem Wechselrichter (3) verbunden ist.

2. Vorrichtung nach Anspruch 1,
**dadurch gekennzeichnet,**
**dass** der erste Stromkreis ein Serienkreis ist, in dem die Speicherdrossel (16) elektrisch zwischen den beiden Schaltern (S3, S4) angeordnet ist.

3. Vorrichtung nach Anspruch 1 oder 2,
**dadurch gekennzeichnet,**
**dass** der zweite Stromkreis ein Serienkreis ist, der von einem ersten Anschluss der Speicherdrossel (16) über eine erste Diode (D3), die beiden Kondensatoren (C1, C2) und eine zweite Diode (D4) zu einem zweiten Anschluss der Speicherdrossel (16) führt.

4. Vorrichtung nach einem der Ansprüche 1 bis 3,
**dadurch gekennzeichnet,**
**dass** die Speicherdrossel (16) geteilt ist und eine derart mit einem der beiden Schalter (S3, S4) verbundene Wicklungsanzapfung (23) aufweist, dass nur ein durch diese Anzapfung (23) festgelegter erster Teil (W11) der Speicherdrossel (16) in dem ersten Stromkreis liegt, während in dem zweiten Stromkreis ein zweiter Teil (W11 + W12) der Speicherdrossel (16) angeordnet ist.

5. Vorrichtung nach Anspruch 1,
**dadurch gekennzeichnet,**
**dass** die Speicherdrossel (16) eine erste Wicklung (W1) und eine zweite Wicklung (W2) enthält, wobei diese beiden Wicklungen (W1, W2) magnetisch miteinander gekoppelt und galvanisch miteinander verbunden sind, wobei die erste Wicklung (W1) mit den beiden Schaltern (S3, S4) den ersten Stromkreis bildet und beide Wicklungen (W1, W2) gemeinsam im zweiten Stromkreis liegen.

6. Vorrichtung nach Anspruch 5,
**dadurch gekennzeichnet,**
**dass** der zweite Stromkreis ein Serienkreis ist, der von einem ersten Anschluss der ersten Wicklung (W1) über die erste Diode (D3), die beiden Kondensatoren (C1, C2), eine zweite Diode (D5), die zweite Wicklung (W2) und eine dritte Diode (D6) zurück zu einem zweiten Anschluss der ersten Wicklung (W1) führt.

7. Vorrichtung nach Anspruch 5 oder 6,
**dadurch gekennzeichnet,**
**dass** die erste Wicklung (W1) geteilt ist und eine derart mit einem der beiden Schalter (S3, S4) verbundene Wicklungsanzapfung aufweist, dass nur ein durch diese Anzapfung festgelegter erster Teil der ersten Wicklung in dem ersten Stromkreis liegt, während in dem zweiten Stromkreis ein zweiter Teil der ersten Wicklung angeordnet ist.

8. Vorrichtung nach einem der Ansprüche 5 bis 7,
**dadurch gekennzeichnet,**
**dass** die beiden Wicklungen (W1, W2) auf einen gemeinsamen Kern (16) gewickelt sind.

9. Vorrichtung nach Anspruch 8,
**dadurch gekennzeichnet,**
**dass** die Wicklungen (W1, W2) mit entgegengesetztem Wicklungssinn auf den Kern (16) gewickelt sind.

10. Vorrichtung nach einem der Ansprüche 5 bis 9,
**dadurch gekennzeichnet,**
**dass** die beiden Wicklungen (W1, W2) gleiche Windungszahlen aufweisen.

11. Vorrichtung nach einem der Ansprüche 1 bis 10,
**dadurch gekennzeichnet,**
**dass** der Gleichspannungswandler (2) als ein Bauteil (27) ausgebildet ist, das eine Mehrzahl von als Steckkontakte ausgebildeten Anschlüssen (12, 13, 28 bis 31) aufweist, mittels derer er je nach gewünschter Erdung des Gleichspannungsgenerators (1) mit zugeordneten Eingängen des Wechselrichters (3) verbindbar ist.

12. Vorrichtung nach einem der Ansprüche 1 bis 11,
**dadurch gekennzeichnet,**
**dass** der Gleichspannungswandler (2) mit einer Erdleitung (19, 20, 21) versehen ist, die einen an den Gleichspannungsgenerator (1) anzuschließenden Eingang (10, 11) mit einem an den Erdanschluss (E3) des Wechselrichters (3) anzuschließenden Ausgang (14) verbindet.

13. Vorrichtung nach Anspruch 12,
**dadurch gekennzeichnet,**
**dass** in die Erdleitung (19, 20, 21) ein Überwachungselement (32) zur Ermittlung von Fehlerströmen geschaltet ist.

14. Vorrichtung nach einem der Ansprüche 1 bis 13,
**dadurch gekennzeichnet,**
**dass** der Wechselrichter (3) als ein eine Halbbrücke aufweisender Wechselrichter ausgebildet ist.

15. Vorrichtung nach einem der Ansprüche 1 bis 13,
**dadurch gekennzeichnet,**
**dass** der Wechselrichter (3) als ein Wechselrichter mit einer Halbbrücke in 3-Punkt-Schaltung ausgebildet ist (Fig. 7).

16. Vorrichtung nach einem der Ansprüche 1 bis 13,
**dadurch gekennzeichnet,**
**dass** der Wechselrichter (3) als ein Wechselrichter mit einer Halbbrücke in 3-Punkt-Schaltung mit Mittelpunkt ausgebildet ist (Fig. 8).

17. Vorrichtung nach einem der Ansprüche 1 bis 13,
**dadurch gekennzeichnet,**
**dass** der Wechselrichter (3) zur ein- oder dreiphasigen Einspeisung der elektrischen Energie in das Energieversorgungsnetz (8) ausgebildet ist (Fig. 2 bis 6 bzw. Fig. 7).

18. Vorrichtung nach einem der vorhergehenden Ansprüche,
**dadurch gekennzeichnet,**
**dass** der Gleichspannungswandler (2) mit dem Wechselrichter (3) zu einer Baueinheit zusammengefasst ist.

## Claims

1. Device for the feed of electrical energy into an energy supply mains (8), comprising a direct voltage converter (2), which is intended for connection with a direct voltage generator (1), and a DC-AC converter (3), which is connected therewith and intended for connection with the energy supply mains (8) and which includes a bipolar voltage intermediate circuit with two capacitors (C1, C2) connected in series and connected together at an earth terminal (E3) to be connected with a terminal of the direct voltage generator (1), wherein the direct voltage converter (2) comprises at least two diodes (D3, D4), a switch and a storage choke (16), which is charged by the direct voltage generator (1) when the switch is closed and discharged by way of the capacitors (C1, C2) and the diodes (D3, D4) when the switch is open, **characterised in that** the storage choke (16) on the one hand forms, together with two switches (S3, S4) arranged in series on either side of the storage choke, a first current circuit, which is intended for charging the storage choke (16) and which by closing of the switches (S3, S4) is connected with the direct voltage generator (1), whilst at the same time the blocking diodes (D3, D4) decouple the storage throttle (16) from the DC-AC converter (3) in terms of potential, and the storage choke (16) on the other hand lies together with the two diodes (D3, D4) and the two capacitors (C1, C2) in a second current circuit, which is intended for simultaneous discharging of the storage choke (16) by way of two capacitors (C1, C2) and diodes (D3, D4) and which is made effective by opening of the switches (S3, S4) so that on discharge of the storage choke (16) the direct voltage generator (1) is electrically connected with the DC-AC converter (3) exclusively by way of an earth line (19, 20, 21) connected with the earth terminal (E3).

2. Device according to claim 1, **characterised in that** the first current circuit is a series circuit in which the storage choke (16) is electrically arranged between the two switches (S3, S4).

3. Device according to claim 1 or 2, **characterised in that** the second current circuit is a series circuit which leads from a first terminal of the storage choke (16) to a second terminal of the storage choke (16) by way of a first diode (D3), the two capacitors (C1, C2) and a second diode (D4).

4. Device according to any one of claims 1 to 3, **characterised in that** the storage choke (16) is divided and comprises a winding tap (23) so connected with one of the two switches (S3, S4) that only a first part (W11), which is defined by this tap (23), of the storage choke (16) lies in the first current circuit, whilst a second part (W11 + W12) of the storage choke (16) is arranged in the second current circuit.

5. Device according to claim 1, **characterised in that** the storage choke (16) includes a first winding (W1) and a second winding (W2), wherein these two windings (W1, W2) are magnetically coupled together and are electrically connected together, wherein the first winding (W1) together with the two switches (S3, S4) forms the first current circuit and the two windings (W1, W2) together lie in the second current circuit.

6. Device according to claim 5, **characterised in that** the second current circuit is a series circuit which leads from a first terminal of the first winding (W1) back to a second terminal of the first winding (W1) by way of the first diode (D3), the two capacitors (C1, C2), a second diode (D5), the second winding (W2) and a third diode (D6).

7. Device according to claim 5 or 6, **characterised in that** the first winding (W1) is divided and comprises a winding tap which is so connected with one of the two switches (S3, S4) that only a first part, which is defined by this tap, of the first winding lies in the first current circuit, whilst a second part of the first winding is arranged in the second current circuit.

8. Device according to any one of claims 5 to 7, **characterised in that** the two windings (W1, W2) are wound on a common core (16).

9. Device according to claim 8, **characterised in that** the windings (W1, W2) are wound on the core (16) with opposite sense of winding.

10. Device according to any one of claims 5 to 9, **characterised in that** the two windings (W1, W2) have the same number of turns.

11. Device according to any one of claims 1 to 10, **characterised in that** the direct voltage converter (2) is constructed as a component (27) comprising a plurality of terminals (12, 13, 28 to 31), which are constructed as plug contacts and by means of which the converter is connectible with associated inputs of the DC-AC converter (3) according to the respectively desired earthing of the direct voltage generator.

12. Device according to any one of claims 1 to 11, **characterised in that** the direct voltage converter (2) is provided with an earth line (19, 20, 21) which connects an input (10, 11), which is to be connected with the direct voltage generator (1), with an output (14), which is to be connected with the earth terminal (E3) of the DC-AC converter (3).

13. Device according to claim 12, **characterised in that** a monitoring element (32) for detection of fault currents is connected into the earth line (19, 20, 21).

14. Device according to any one of claims 1 to 13, **characterised in that** the DC-AC converter (3) is constructed as a DC-AC converter having a half bridge.

15. Device according to any one of claims 1 to 13, **characterised in that** the DC-AC converter (3) is constructed as a DC-AC converter with a half bridge in three-point connection (Fig. 7).

16. Device according to any one of claims 1 to 13, **characterised in that** the DC-AC converter (3) is constructed as a DC-AC converter with a half bridge in three-point connection with a centre point (Fig. 8).

17. Device according to any one of claims 1 to 13, **characterised in that** the DC-AC converter (3) is constructed for single-phase or three-phase feed of electrical energy into the energy supply mains (8) (Figs. 2 to 6 or Fig. 7).

18. Device according to any one of the preceding claims, **characterised in that** the direct voltage converter (2) is combined with the DC-AC converter (3) to form a subassembly.

## Revendications

1. Dispositif pour l'injection d'énergie électrique dans un réseau d'alimentation en énergie (8) comprenant un transformateur de tension continue (2) destiné être raccordé à un générateur de tension continue (1) et un onduleur (3) relié à ce transformateur et destiné à être connecté au réseau d'alimentation en énergie (8), et qui comprend un circuit intermédiaire de tension bipolaire comportant deux condensateurs (C1, C2) montés en série, qui sont reliés l'un à l'autre sur une connexion de terre (E3) devant être reliée à une connexion du générateur de tension continue (1), le transformateur de tension continue (2) comportant au moins deux diodes (D3, D4), un interrupteur et une bobine de charge (16) qui est chargée par le générateur de tension continue (1) lorsque l'interrupteur est fermé et qui est déchargée à travers les condensateurs (C1, C2) et les diodes (D3, D4) lorsque l'interrupteur est ouvert,
**caractérisé en ce que,**
d'une part, la bobine de charge (16) forme, avec deux interrupteurs (S3, S4) disposés en série des deux côtés de la bobine de charge, un premier circuit destiné à charger la bobine de charge (16) et qui est connecté au générateur de tension continue (1) par la fermeture des interrupteurs (S3, S4), alors qu'en même temps, les diodes de blocage (D3, D4) découplent la bobine de charge (16) de l'onduleur (3) en potentiel et, d'autre part, la bobine de charge (16) se trouve, avec les deux diodes (D3, D4) et les deux condensateurs (C1, C2), dans un second circuit destiné à décharger en même temps la bobine de charge (16) à travers les deux condensateurs (C1, C2) et les deux diodes (D3, D4), et qui est activé par l'ouverture des interrupteurs (S3, S4), de sorte que, lors de la décharge de la bobine de charge (16), le générateur de tension continue (1) est relié galvaniquement à l'onduleur (3) uniquement par une ligne de mise à la terre (19, 20, 21) reliée à la connexion de terre (E3).

2. Dispositif selon la revendication 1,
**caractérisé en ce que**
le premier circuit est un circuit série dans lequel la bobine de charge (16) est disposée électriquement entre les deux interrupteurs (S3, S4).

3. Dispositif selon la revendication 1 ou 2,
**caractérisé en ce que**
le second circuit est un circuit série qui conduit, depuis une première connexion de la bobine de charge (16) et à travers une première diode (D3), les deux condensateurs (C1, C2) et une seconde diode (D4), à une seconde connexion de la bobine de charge (16).

4. Dispositif selon l'une des revendications 1 à 3,
**caractérisé en ce que**
la bobine de charge (16) est divisée et comporte une prise d'enroulement (23) reliée à un des deux interrupteurs (S3, S4) de telle manière que seule une première partie (W11) de la bobine de charge (16), qui est définie par cette prise (23), se trouve dans le premier circuit, tandis qu'une seconde partie (W11 + W12) de la bobine de charge (16) est disposée dans le second circuit.

5. Dispositif selon la revendication 1,
**caractérisé en ce que**
la bobine de charge (16) renferme un premier enroulement (W1) et un second enroulement (W2), les deux enroulements (W1, W2) étant couplés magnétiquement l'un à l'autre et reliés galvaniquement l'un à l'autre, le premier enroulement (W1) formant le premier circuit avec les deux interrupteurs (S3, S4), et les deux enroulements (W1, W2) se trouvant en commun dans le second circuit.

6. Dispositif selon la revendication 5,
**caractérisé en ce que**
le second circuit est un circuit série qui, en partant d'une première connexion du premier enroulement (W1), revient à une seconde connexion du premier enroulement (W1) en passant par la première diode (D3), les deux condensateurs (C1, C2), une deuxième diode (D5), le second enroulement (W2) et une troisième diode (D6).

7. Dispositif selon la revendication 5 ou 6,
**caractérisé en ce que**
le premier enroulement (W1) est divisé et comporte une prise d'enroulement reliée à un des deux interrupteurs (S3, S4) de telle manière que seule une première partie du premier enroulement, qui est définie par cette prise, se trouve dans le premier circuit, tandis qu'une seconde partie du premier enroulement est disposée dans le second circuit.

8. Dispositif selon l'une des revendications 5 à 7,
**caractérisé en ce que**
les deux enroulements (W1, W2) sont bobinés sur un noyau commun (16).

9. Dispositif selon la revendication 8,
**caractérisé en ce que**
les enroulements (W1, W2) sont bobinés sur le noyau (16) avec des sens d'enroulement opposés.

10. Dispositif selon l'une des revendications 5 à 9,
**caractérisé en ce que**
les deux enroulements (W1, W2) comportent des nombres de tours identiques.

11. Dispositif selon l'une des revendications 1 à 10,
**caractérisé en ce que**
le transformateur de tension continue (2) est constitué par un composant (27) qui comporte une pluralité de connexions (12, 13, 28 à 31) constituées par des contacts à fiche et au moyen desquelles, selon la mise à la terre souhaitée du générateur de tension continue (1), il est connecté aux entrées correspondantes de l'onduleur (3).

12. Dispositif selon l'une des revendications 1 à 11,
**caractérisé en ce que**
le transformateur de tension continue (2) est pourvu d'une ligne de terre (19, 20, 21) qui relie une entrée (10, 11) devant être raccordée au générateur de tension continue (1) à une sortie (14) devant être connectée à la connexion de terre (E3) de l'onduleur (3).

13. Dispositif selon la revendication 12,
**caractérisé en ce que**
un élément de surveillance (32) est intercalé dans la ligne de terre (19, 20, 21) pour assurer la détection des courants de fuite.

14. Dispositif selon l'une des revendications 1 à 13,
**caractérisé en ce que**
l'onduleur (3) est constitué par un onduleur comportant un demi-pont.

15. Dispositif selon l'une des revendications 1 à 13,
**caractérisé en ce que**
l'onduleur (3) est constitué par un onduleur comportant un demi-pont en montage à 3 points (Fig. 7).

16. Dispositif selon l'une des revendications 1 à 13,
**caractérisé en ce que**
l'onduleur (3) est constitué par un onduleur comportant un demi-pont en montage à 3 points avec point central (Fig. 8).

17. Dispositif selon l'une des revendications 1 à 13,
**caractérisé en ce que**
l'onduleur (3) est conçu pour l'injection monophasée ou triphasée de l'énergie électrique dans le réseau d'alimentation en énergie (8) (Fig. 2 à 6 ou Fig. 7).

18. Dispositif selon l'une des revendications précédentes,
**caractérisé en ce que**
le transformateur de tension continue (2) est regroupé avec l'onduleur (3) en une unité modulaire.
